# EUROPEAN PATENT APPLICATION

(11) **EP 1 560 367 A2**
(43) Date of publication of application: **03.08.2005**
(21) Application number: 04257605.8
(22) Date of filing: 07.12.2004
(51) Int. Cl.: H04L 12/28

(54) **Communication card**

(30) Priority: 08.12.2003 JP 2003408449
(71) Applicant: Sony Corporation, Tokyo 141-0001 (JP)
(72) Inventor: Sakao, Katsutoshi, Shinagawa-ku Tokyo (JP); Maeda, Satoru, Shinagawa-ku Tokyo (JP); Onishi, Manabu, Shinagawa-ku Tokyo (JP); Okazaki, Shinji, Shinagawa-ku Tokyo (JP)
(74) Representative: Mills, Julia

(57) **Abstract**

The communication card has a communication circuit for receiving digital data that has been sent as a streaming broadcast through a network and a decoder for decoding the digital data received by the communication circuit to convert it into data having a format that can be reproduced in a streaming player that the personal computer has. The card also has a connector for connecting the card into a connector in a card slot of the personal computer. The card has an interface for interfacing the card and the personal computer to supply the digital data output by the decoder to the connector of the card. Thus, the personal computer reproduces information by the digital data sent as a streaming broadcast through the network.

## Description

The present invention relates to a communication card. The communication card can be inserted into an electronic apparatus such as, for example, a personal computer.

Popularization and broadbandization of the Internet have provided a situation where digital data such as image data or audio data can be distributed to an ordinary home in real time. Thus, a television program broadcast in a specif ic area may be viewed in another area by broadcasting through the Internet. Further, the television program may be also broadcast to only viewer who has contracted beforehand.

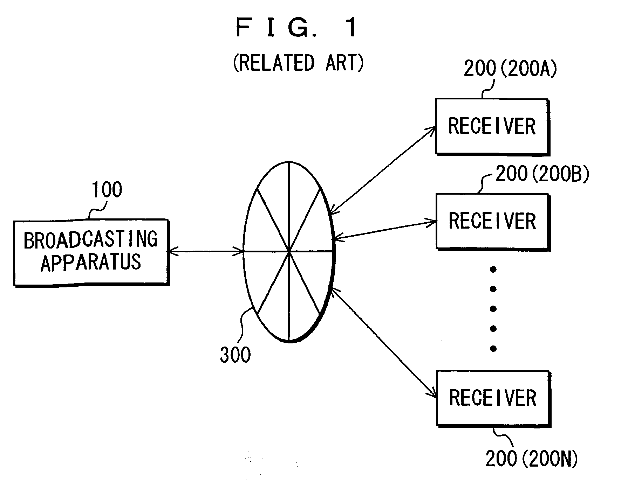

FIG. 1 shows a configuration of such the broadcasting system. The broadcasting system comprises broadcasting apparatus 100 for broadcasting the digital data such as image data or audio data on streaming scheme and plural receivers 200 (200A,..., 200N). They are connected to the Internet 300.

Each of the receivers 200 has a two-way communication function and is connected to the broadcasting apparatus 100 through the Internet 300 so that the receivers 200 can be registered in the broadcasting apparatus 100 therethrough. Such the registration is used for authentication of each of the receivers 200, a contract with them and the like. The registration can be performed by any means and way other than the Internet 300.

When a user of a receiver 200A, for example, views a television program, the receiver 200A requests the broadcasting apparatus 100 to transmit a broadcast program of interest through the Internet 300. The request is executed by transmitting information for identifying the receiver 200A and for specifying the broadcast program of interest.

The broadcasting apparatus 100 then performs an authentication processing on the receiver 200A that has requested it to transmit the broadcast program. In this case, the receiver 200A is properly registered, the broadcasting apparatus 100 broadcasts to the receiver 200A the digital data such as image data and audio data. The receiver 200A then receives the broadcast digital data and outputs it as image and audio.

Thus, the receiver 200A can receive through the Internet 300 contents including image and audio prepared in the broadcasting apparatus 100. This is, the broadcasting apparatus 100 can broadcast various kinds of contents through the Internet 300 and a viewer can view these contents through the Internet 300 (see Japanese Patent Application Publication 2002-305512).

When he or she views the streaming broadcast through the Internet 300 as described above, the dedicated receivers 200 are required. General personal computer, personal digital assistance (PDA) and the like are unavailable for viewing the broadcast programs in their own original functions.

It is noted that in the following description, terms, "personal computer" includes equipment such as PDA having reproduction function of image and audio signals.

Various respective aspects of the present invention are set out in the appended claims.

According to an aspect of the present invention, there is provided a communication card for communicating. The communication card is used with the card being inserted into a card slot of electronic apparatus. The card comprises a communication circuit for receiving digital data streaming-transmitted through a network and a decoder for decoding and converting the digital data received by the communication circuit to data having a format reproduced by a streaming player of the electronic apparatus. The card also comprises a connector for connecting the card into a connector in the card slot of the electronic apparatus. The card further comprises an interface for interfacing the electronic apparatus and the card to supply the digital data output by the decoder to the connector of the card. The connector of the card is connected with the connector in the card slot of the electronic apparatus, thereby reproducing information of the digital data streaming-transmitted through the network in the electronic apparatus.

The communication circuit that has received digital data streaming-transmitted through a network sends it to the decoder. The decoder decodes the digital data to convert data having a format that can be reproduced by a streaming player of the electronic apparatus. When the card is inserted into the electronic apparatus, a connector of the card is connected with a connector in the card slot of the electronic apparatus. Through the interface for interfacing the electronic apparatus and the card, the digital data output by the decoder is then supplied to the connector of the card. Thus, the electronic apparatus reproduces information of the digital data streaming-transmitted through the network.

According to embodiments of the invention, it is possible to receive and reproduce a program through a streaming broadcast via the network in a general personal computer, PDA or the like that has no receiving function by preparing specific hardware and software.

The invention will now be described by way of example with reference to the accompanying drawings, throughout which like parts are referred to by like references, and in which:
FIG. 1 is a diagram for showing a configuration of a conventional broadcasting system;
FIG. 2 is a systematic diagram for showing a preferred embodiment of a communication card according to an embodiment of the invention ; and
FIG. 3 is a diagram for showing a preferred embodiment of software used in embodiments of this invention

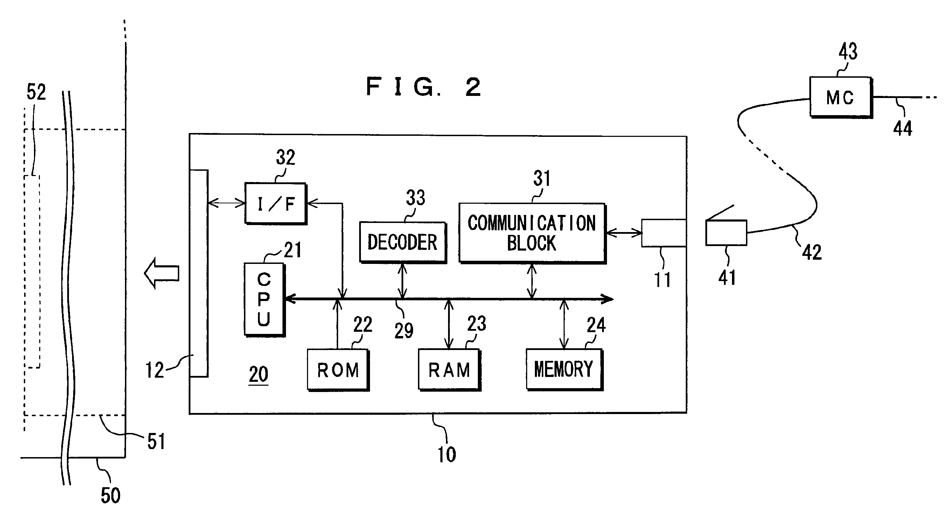

Hereinafter, embodiment(s) of the present invention will be described with reference to the accompanying drawings. FIG. 2 shows a configuration of an embodiment of a communication card 10 according to an embodiment of the invention. In FIG. 2, a personal computer 50 into which the communication card 10 is inserted is also shown. In this embodiment, the communication card 10 is based on a standard of Personal Computer Memory Card International Association (PCMCIA) card (hereinafter referred to as "PC card").

Thus, the communication card 10 has a size similar to that of PC card as a whole, and it has a jack 11 and a connector 12. The jack 11 is used for connecting the card 10 with an outside network through Ethernet (trademark). In this embodiment, RJ-45 modular jack is used as the jack 11.

When trying to receive the streaming broadcast, a modular plug 41 is inserted into the jack 11. In a shown case, a connection with the broadcasting apparatus 100 along the line of the modular plug 41, Local Area Network (LAN) cable 42, a media converter 43, an optical fiber line 44, an Internet Service Provider (ISP) (not shown) , and the Internet 300 (see FIG. 1) is executed.

The connector 12 is used for connecting with a connector 52 of the PC card slot 51 when inserting the communication card 10 into the PC card slot 51 of the personal computer 50.

The communication card 10 has a microcomputer 20 as a control circuit for performing various kinds of controls. The microcomputer 20 has a Central Processing Unit (CPU) 21, Read Only Memory (ROM) 22 into which various kinds of program executed by the CPU 21 is written, Random Access Memory (RAM) 23 for working area, non-volatile memory 24. These memories 22 to 24 are connected to the CPU 21 via a system bus 29.

The jack 11 is connected with the system bus 29 through a communication block 31. The connector 12 is also connected with the system bus 29 through PC card interface 32. In this case, the communication block 31 is composed of Large Scale Integration (LSI) for implementing network communication. The communication block 31 performs an analysis on a packet that is transmitted or received according to Transmission Control Protocol/Internet Protocol (TCP/IP), selection of data, and controls of transmission and reception. PC card interface 32 is composed of LSI for implementing an interface between the microcomputer 20 and the personal computer 50 according to a standard of PC card.

MPEG decoder 33 is composed of LSI and connected with the system bus 29. This MPEG decoder 33 decodes and converts image and audio MPEG digital data output from the communication block 31 into data having a format that can be reproduced in a "streaming player", which will be described later.

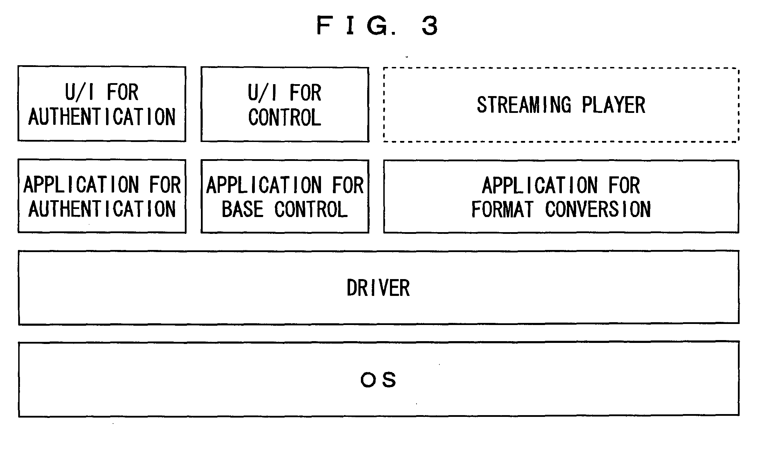

FIG. 3 shows a preferred embodiment of software for using the communication card 10.

Operating system for operating the personal computer 50 is referred to as "OS". Software for reproducing image and audio data in the personal computer 50 is referred to as "Streaming Player". These "OS" and "Streaming Player" are installed in the personal computer 50 beforehand.

Software for making the communication card 10 usable in the personal computer 50 is referred to as "Driver". Software for allowing the broadcasting apparatus 100 (see FIG. 3) to authenticate the communication card 10 is referred to as "Application for Authentication". Software for user interface when performing the authentication is referred to as "U/I for Authentication".

Software for control when using the communication card 10 is referred to as "Application for Base Control". Software for user interface when using the communication card 10 is referred to as "U/I for control".

Software for converting the image and audio digital data transmitted from the broadcasting apparatus 100 associating with MPEG decoder 33 into data having a format that can be handled by the "Streaming Player" is referred to as "Application for Format Conversion".

In pieces of software shown in FIG. 3, the pieces of software excluding "OS" and "Streaming Player" are stored in a predetermined medium such as Compact Disc-Read Only Memory (CD-ROM). When using the communication card 10, the pieces of software have been installed in the personal computer 50 beforehand from the CD-ROM.

In such a configuration, the communication card 10 is set into the PC card slot 51 of the personal computer 50 and the plug 41 is connected with the jack 11. The personal computer 50 is connected to the Internet 300 through the line of the connector of PC card slot 51, the connector 12, the interface 32, the microcomputer 20, the communication block 31, and the jack 11 in addition to a cable 42.

If trying to register the communication card 10 in the broadcasting apparatus 100, "Application for Authentication" and "U/I for Authentication" that have been installed in the personal computer 50 are loaded so that the registration can be performed in the broadcasting apparatus 100 via the communication card 10. Such the registration is executed by using unique information of the communication card 10, for example, Media Access Control (MAC) address as a part of identification information therefor.

On the other hand, if trying to receive a program, "Application for Authentication" and "U/I for Authentication" that have been installed in the personal computer 50 are loaded so that the authentication can be requested to the broadcasting apparatus 100 via the communication card 10. Such the authentication is executed by comparing unique information to the communication card 10 that has been registered in the broadcasting apparatus 100 with unique information to the communication card 10 set into the PC slot 51.

As a result of the authentication, when a receipt of the broadcast program is accepted, the personal computer 50 requests the broadcasting apparatus 100 to broadcast the program of interest via the communication card 10. When the broadcasting apparatus 100 receives this request, it takes digital data of the corresponding program out of a contents-server (not shown) by turns and broadcasts it to the personal computer 50 based on a streaming form.

In the communication card 10, then, the digital data broadcast from the broadcasting apparatus 100 is taken out of the communication block 31, thus supplying it to the MPEG decoder 33. In the decoder 33, the digital data is decoded and converted to the streaming data having a format that can be reproduced in "Streaming Player" installed in the personal computer 50 and the streaming data thus decoded and converted is taken out.

This streaming data is then supplied to the personal computer 50 via the interface 32 so that by the "Streaming Player", the data can be converted into linear digital data. The personal computer 50 then performs Digital to Analogue (D/A) conversion on this linear digital data into analogue signal, which is supplied to a display or a speaker (both not shown). Thereby, a viewer can view, by the personal computer 50, the broadcast program requested to the broadcasting apparatus 100.

Thus, according to this communication card 10, a personal computer having no receiving function can receive and reproduce the program that has been streaming-transmitted through a network.

The communication card 10 also has a configuration of PC card so that it can increase flexibility in its work. If a personal computer has a PC card slot, it can view the streaming broadcast, thereby causing the communication card to spread its scope. Further, if a viewer has already purchased a personal computer, he or she can view the streaming broadcast by his or her personal computer, thereby making the communication card to be easily purchased so as to establish its market.

If a user has plural personal computers or he or she uses a personal computer in the field, he or she can view the streaming broadcast by preparing only the communication card 10 and, for example, CD-ROM into which software shown in FIG. 3 is written, thereby allowing the communication card to excel in portability, convenience, and mobility.

Although according to the above-described embodiments, the communication card 10 is composed of PC card, the present invention is not restricted to these embodiments. A size of the connection part thereof with the personal computer, a standard of signal and the like may be based on a standard of card such as compact flash (trademark) , memory stick (trademark), and Secure Digital (SD) card.

Although according to the above-described embodiments, the communication card 10 is connected with the broadcasting apparatus 100 via the optical fiber line 44 and the Internet 300, the present invention is not restricted to this embodiments. The communication card 10 can be connected with the broadcasting apparatus 100 via Asymmetric Digital Subscriber Line (ADSL) and the Internet 300 or any network such as cable television other than the Internet.

Although according to the above-described embodiments, a viewer views the image and the audio, the present invention is not restricted to these embodiments. Embodiments of this invention can also be applied to a case where any one of the image data and the audio data is received and reproduced.

Although according to the above-described embodiments, the personal computer has been illustrated as an electronic apparatus, the present invention is not restricted to these embodiments. Embodiments of this invention can also be applied to a Consumer Electronic (CE) apparatus such as a television receiver, various kinds of display devices, and a radio receiver that have a card slot.

In stead of the authentication by registering the communication card 10 in the broadcasting apparatus 100, as described above, a system in which unique information to a user, for example, is registered and authenticated may be used in embodiments of the invention. Further, embodiments of this invention can be applied to a case where the broadcasting apparatus 100 requires neither registration nor authentication.

While the foregoing specification has described preferred embodiment(s) of the present invention, one skilled in the art may make many modifications to the preferred embodiment without departing from the invention in its broader aspects. The appended claims therefore are intended to cover all such modifications as fall within the true scope of the invention.

Various respective aspects and features of the invention are defined in the appended claims. Features from the dependent claims may be combined with features of the independent claims as appropriate and not merely as explicitly set out in the claims.

## Claims

1. A communication card for communicating, said card being used with the card being inserted into a card slot of electronic apparatus and comprising:
a communication circuit for receiving digital data streaming-transmitted through a network;
a decoder for decoding and converting said digital data received by the communication circuit to data having a format reproduced by a streaming player of the electronic apparatus;
a connector for connecting the card into a connector in the card slot of the electronic apparatus; and
an interface for interfacing said electronic apparatus and said card to supply the digital data output by the decoder to the connector of the card, said connector of the card being connected with the connector in the card slot of said electronic apparatus, thereby reproducing information of the digital data streaming-transmitted through the network in the electronic apparatus.

2. The communication card according to Claim 1, wherein the digital data streaming-transmitted through the network includes at least one of first image data and first audio data; and
wherein information reproduced in the electronic apparatus includes at least one of second image data and second audio data, said second image data and second audio data corresponding to said first image data and first audio data.

3. The communication card according to Claim 2, wherein the card as a whole is based on a standard of Personal Computer Memory Card International Association (PCMCIA) card.
